# EUROPEAN PATENT SPECIFICATION

(11) **EP 4 427 010 B1**
(45) Date of publication and mention of the grant of the patent: **06.08.2025**
(21) Application number: 22859522.9
(22) Date of filing: 16.12.2022
(51) Int. Cl.: G01M 15/14, F02K 9/96

(54) **LABORATORY STAND FOR STUDYING THE EFFECT OF ACCELERATION ON THE LINEAR BURNING RATE OF SOLID ROCKET PROPELLANTS**
LABORSTAND ZUR UNTERSUCHUNG DER AUSWIRKUNG VON BESCHLEUNIGUNGEN AUF DIE LINEARE VERBRENNUNGSRATE VON FESTSTOFFRAKETENTREIBSTOFFEN
STATIF DE LABORATOIRE POUR ÉTUDIER L'EFFET D'ACCÉLÉRATION SUR LE TAUX DE COMBUSTION LINÉAIRE DE PROPERGOLS SOLIDES

(30) Priority: 17.12.2021 PL 43988021
(43) Date of publication of application: 11.09.2024
(73) Proprietor: POLITECHNIKA WARSZAWSKA, 00-661 Warszawa (PL)
(72) Inventor: KINDRACKI, Jan, 05-825 Grodzisk Mazowiecki (PL); WACKO, Krzysztof, 22-600 Tomaszów Lubelski (PL); WOZNIAK, Przemyslaw, 02-784 Warszawa (PL); MEZYK, Lukasz, 01-957 Warszawa (PL)
(74) Representative: JWP Patent & Trademark Attorneys
(86) International application number: PCT/PL2022/050094
(87) International publication number: WO 2023/113628

(56) References cited:
- CN-A- 102 680 240
- CN-A- 104 019 994
- CN-A- 109 459 242
- CN-A- 113 776 842

## Description

The subject of the invention is a laboratory stand for studying the effect of accelerations on the linear burning rate of solid rocket propellants.

So far, a review of the available literature has not revealed domestic solutions for studying the effect of accelerations (rotary motion) on the linear burning rate of solid rocket propellants.

From the publication by J. B. Anderson, R. E. Reichenbach, "An Investigation of the Effect of Acceleration on the Burning Rate of Composite Propellants" , AIAA Journal Vol.6 No.2, Feb 1968, as well as from the publication by Melvin John Bulman, "The effect of Acceleration on the Burning Rate of Double Base Rocket Propellants," Ph.D. Thesis, U.S. Naval Postgraduate School, 1968, and the publication by Soe Hlaing Tun and Xiang Hong Jun, "Star Grain Regression Under Spin Induced Acceleration Effect, "Applied Mechanics and Materials, Vols. 110-116, pp 451-456, 2011 doi:10.4028/www.scientific.net/AMM.110-116.451, and also from the publication by David R. Greatrix, "Assessing the Influence of Orientation Angle on Acceleration-Augmented Burning in Solid Rockets" , ATAA, 2018, the results of ongoing experimental studies and computer simulations of the effect of accelerations on the rate of burning of solid rocket propellants are known, but without disclosing details of the test stand design. Another example of a test stand for rocket propellants is described by CN109459242A.

The laboratory stand for studying the effect of accelerations on the linear burning rate of solid rocket propellants according to claim 1 comprises a DC electric motor with an encoder, an energy storage module, an igniter power supply system, an electronic pressure measuring system in a combustion chamber and a rocket micromotor. The electric motor is connected to an encoder, at the same time the electric motor is connected to the main shaft by a bellows coupling, and an energy storage module is placed on the main shaft. On the opposite side of the rocket micromotor body located on the main shaft by a fastener there is the igniter power supply system seated on the main shaft containing a power supply system sleeve on which conductive rings and insulating rings are placed, ending with a closing ring and carbon brushes. The electronic pressure measuring system in the combustion chamber includes a pressure sensor located in a pressure sensor socket connected to the rocket micromotor body by a pressure measurement port. And furthermore, on the threaded end of the main shaft is provided a micromotor body mount containing a combustion chamber with an internal collector groove and a pressure measurement port, and a safety valve port with a safety valve along with an outlet socket on the side of the solid rocket micromotor body.

Preferably, the electric motor is frontally connected to the electric motor mount.

Preferably, the main shaft is supported on a first bearing unit and a second bearing unit.

It is preferred, when the first bearing unit includes a double-row angular ball bearing housed in a housing attached to the stand base.

It is preferred, when the second bearing unit comprises a double-row angular ball bearing immobilized in the housing by two internal spring-loaded circlips.

It is preferred, when two lithium-polymer energy storage batteries are arranged symmetrically on both sides of the main shaft.

Preferably, the power supply system sleeve contains four conductive rings and three insulating rings.

Preferably, carbon brushes are located in the socket in contact with the conductive rings by means of a spring clamping system located in the socket.

Preferably, the socket is located on the power supply system base.

Preferably, the solid rocket micromotor body is connected to the mount via six threaded rods with nuts.

Preferably, the pressure sensor socket has a cavity for a pressure sensor insert and a filter, a distance sleeve closed by a clamping nut.

Preferably, the safety valve has a safety membrane.

Preferably, the outlet socket contains a nozzle insert positioned in the pressure.

It is preferred, when between the nozzle insert and the nozzle socket is a membrane.

Preferably, the igniter power supply system contains an electric primer and a disk-shaped gunpowder lozenge placed in a housing sealed with an o-ring.

The designed test stand makes it possible to carry out experimental tests to determine the effect of accelerations acting on a solid propellant placed in a combustion chamber of a solid rocket micromotor on the relationship between linear burning rate and pressure in the combustion chamber. In addition, it is possible to determine a change in performance of a tested motor resulting from pressure change in the combustion chamber due to the presence of centrifugal acceleration. This is an important issue in the context of the application of rocket motors, regardless of whether this constitutes the main drive or auxiliary or control motors. During flight, a rocket missile is subjected to accelerations of a significant g value (with respect to the gravitational acceleration). During the accelerated or spinning flight of an object in which a solid propellant motor is installed, the grain burning rate of the solid propellant changes with the value of this acceleration. Since the linear burning rate is the basic parameter describing the properties of solid rocket propellants, knowledge of the effect of acceleration on this value, allows to determine the limits of the safety of operation of the combustion chamber (maximum operating pressure), changes in the thrust profile of the motor over time, the consequence of which can be changes in the range or altitude of the flight of an object powered by a solid propellant rocket motor.

The following technical means were used in the solution:
- a laboratory solid rocket micromotor - attached to the end of the drive shaft, allowing to carry out experimental combustion of a test sample to determine the linear burning rate of solid rocket propellant under the conditions of a known value of acceleration acting on the propellant grain;
- an electric drive in the form of a DC electric motor (together with an encoder - to measure the rotational speed), the purpose of which is to generate an appropriate value of acceleration in the form of centrifugal acceleration (obtained by setting the appropriate value of the rotational speed of the tested micromotor);
- a system for measuring pressure in a combustion chamber by the use of a pressure sensor together with an amplifier system and data recording on a memory card - the system allows pressure measurement at a frequency of 2kHz during the action of acceleration affecting the grain of solid rocket propellant;
- an igniter control system and measurement of its electrical parameters during operation;
- a measurement card together with dedicated software for measurement data acquisition.

Several component systems can be distinguished in the design of the test stand:
- a drive module - an electric motor with an encoder, rotating the solid rocket micromotor by the main shaft;
- two bearing supports of the main shaft (one of the supports allows compensation of assembly errors of the shaft);
- an energy storage module (to supply the pressure measuring system in the combustion chamber);
- a three-channel igniter power supply system consisting of an ignition unit and a gunpowder igniter;
- a laboratory solid rocket micromotor together with a necessary mechanical interface mounted on the end of the shaft.

The following indicates the next steps carried out during the operation of the test stand:
- installation of the appropriate nozzle membrane (nozzle plug) and safety membrane;
- activation of electronic measuring systems (measuring card, combustion chamber pressure measuring system);
- placing the tested sample of propellant in the combustion chamber;
- placing the igniter in the corresponding socket of the rocket micromotor body;
- setting the desired acceleration (setting the appropriate rotating speed of the driving DC electric motor - controlling the value of the supply power voltage);
- starting the measurement system and the data acquisition program (pressing the READY button in the data acquisition program - transition into the standby state), activating the ignition system (unlocking the safety button);
- conducting the experiment (the use of the measurement card for automatic start the driving electric motor, then after a few seconds start of the ignition initiation system, and after the expiration of a pre-programmed time, automatic recording of measurement data in the computer - all data except the pressure in the combustion chamber);
- deactivation of the ignition initiation system (pressing the safety button and the STOP button in the data acquisition program); transfer of the chamber pressure measurement data from the memory card to the computer memory;
- carrying out operational steps (dismantling of the igniter, cleaning of the combustion chamber, cleaning of the outlet nozzle, replacement of the nozzle membrane).

The object of the invention in an embodiment is shown on the drawing, in which:

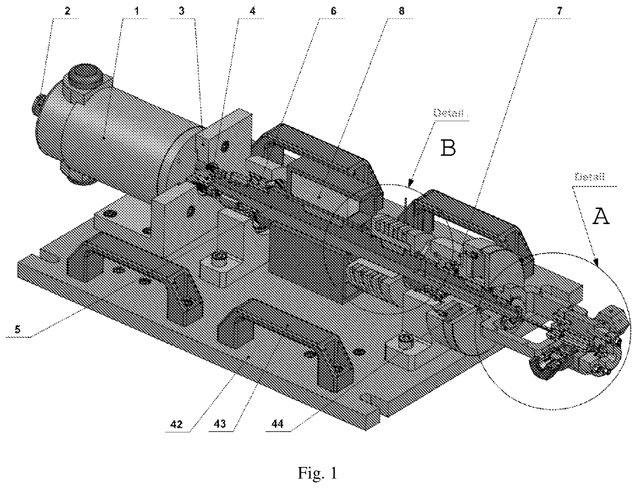

Fig. 1 shows a three-quarter view in axonometric projection with cutaway of one-quarter of the body,
Fig. 2 shows a detailed view of the laboratory solid rocket micromotor (exploded view), and
Fig. 3 shows a detail view of the igniter power supply system.

### Embodiment

The subject of the invention is a laboratory stand for studying the effect of acceleration on the linear burning rate of a solid rocket propellant sample and on the pressure in the combustion chamber. The test stand makes it possible to determine the effect of acceleration on the nature of the relationship between burning rate and chamber pressure (constant, linear, etc.) and on changes in the performance of the rocket motor under test resulting from changes of pressure in the combustion chamber due to the occurrence of centrifugal acceleration.

The laboratory stand for studying the effect of acceleration on the linear burning rate of solid rocket propellants according to the invention is designed to determine the effect of acceleration on the nature of the relationship between the linear burning rate and the pressure in the combustion chamber, as well as on the changes in the performance of the tested solid rocket micromotor resulting from the change of pressure in the chamber caused by the occurrence of centrifugal acceleration (rocket micromotor put into rotary motion).

The invention includes several basic parts, including an electric drive module, two bearing shaft supports, an energy storage module, an igniter power supply system, a electronic pressure measuring system in the combustion chamber, and a laboratory solid rocket micromotor (equipped with a suitable mechanical interface connecting it to the main shaft end of the main stand).

The electric drive module contains an electric motor (1) supplied with a constant voltage in the range of 6 - 27 V, along with an attached encoder (2) for determining the rotating speed of the electric motor. The electric motor (1) is frontally connected with an angle-shaped mount (3) of electric motor by a set of 4 hexagon-socket cap screws. The electric motor mount (3) was fixed to the stand base (42) by a set of 4 Allen screws. There are also 4 handles (43) bolted to the stand base (42) to facilitate easy handling of the assembled stand. An important component of the drive module is the main shaft (5), which is connected to the electric motor (1) by means of a bellows (backlash-free) coupling (4), which compensates possible shaft misalignment errors and cushions vibrations from uneven weight distribution in the rotating system.

The main shaft was supported in two places with a first bearing unit (6) and a second bearing unit (7). The first bearing unit (6) contains a double-row angular ball bearing loosely placed in a mounting, which was placed in a housing that simultaneously serves as a component mounting the first bearing unit to the stand base (42). The second bearing unit (7) is an almost identical set, the only difference consists in that the bearing has been immobilized in the mounting by means of two internal spring-loaded circlips. The adopted bearing configuration is as follows: the bearing of the first bearing unit - floating, the bearing of the second bearing unit - locating.

Another component installed on the main shaft (5) is an energy storage module (8) used as a power source of the electronic pressure measuring system (44) in the combustion chamber.

The energy storage module (8) contains two lithium-polymer batteries, symmetrically arranged on both sides of the main shaft (5), enclosed in a housing.

The energy storage module (8) is seated on the shaft, the rotation relative to the shaft axis is blocked by a parallel key, while longitudinal movement was prevented by an external circlip. The supply lines between the energy storage module (8) and the pressure measuring system were routed through a specially hollowed hole inside the shaft. Such routing of the cables allows the drive shaft to rotate freely.

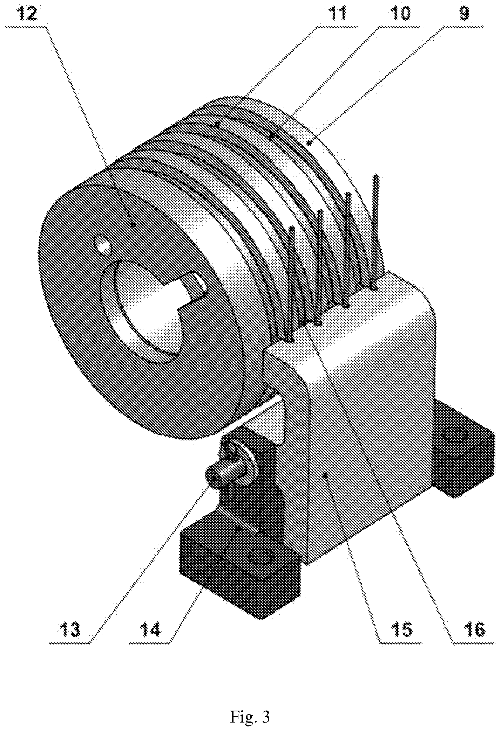

The three-channel igniter power supply system (B) (shown in Fig. 3) includes power supply system sleeves (9), on which four conductive (slip) rings (10) and three insulating rings (11) are alternately placed, the whole being terminated with a closing ring (12).

Three conductive rings (10) are used to transfer 3 independent positive pole power channels, while the fourth conductive ring (10) is the common ground of the power channels. Such arrangement makes it possible to power as many as three, independent igniter modules. Components of the igniter power supply system (B) are seated on the shaft (5), the rotational movement is blocked by a parallel key, while the longitudinal movement is blocked by an external circlip. The elements transferring power to the three-channel igniter power supply system (B) are 4 carbon brushes (16), located in a socket (15), which are in contact with conductive rings (10). The carbon brushes socket is mounted on the power supply system base (14) and a pin (13), locked on both sides of the base (14) with a pin, is passed through it, allowing lateral movement with respect to the axis of the shaft (5). The system of pressing the carbon brushes against the conductive rings is based on the use of springs, located in the socket (15) and the whole is pressed by means of the set screw (17) with a ball, screwed into the corresponding wall of the base (14), where the surface of the ball is in contact with the housing of the carbon brush sockets. The power supply (14) system base was fixed to the stand base (42) with 2 hexagon-socket cap screws. An electrical wire was soldered on the inner surface of each conductive ring (10). The resulting wire bundle was routed out to the vicinity of the face of the shaft/shaft end (5) successively through the face hole of the closing ring (12), the transverse hole of the shaft relative to its axis, and through the face hole hollowed in the shaft (5).

The electronic pressure measuring system (44) in the combustion chamber includes a pressure sensor (36), located in the socket (35) connected to the solid rocket micromotor (A) body (21) through a special port (33), a circuit for normalizing and amplifying the measurement signal to typical 0 - 10 V analog voltage, and a circuit for supplying the measurement sensor. The whole system was built on a common circular-shaped PCB with a central hole, placed and enclosed in a housing. The housing of the measuring system was mounted on the shaft with a keyed connection and an external circlip.

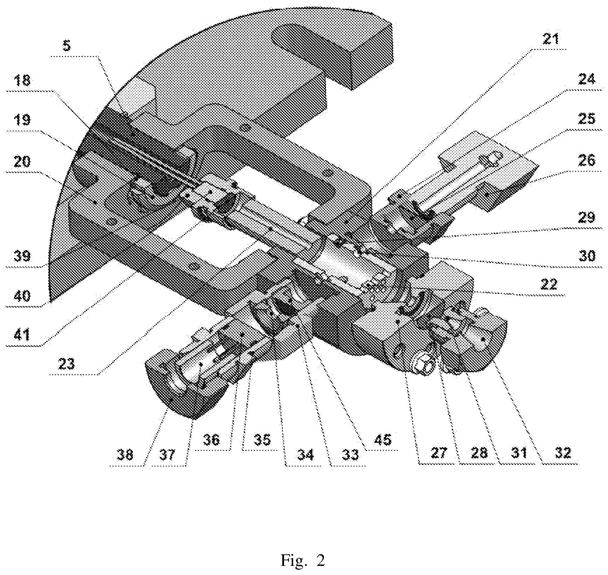

On the threaded end of the shaft (5) was placed a prismatic key-locked mount (20) of the solid rocket micromotor body, bearing lock washer MB3 (18), and then the whole was tightened with bearing lock nut KM3 (19). The central part of the laboratory solid rocket micromotor (A) (shown in detail in Fig. 2) is the rocket micromotor (A) body (21) connected to the mount (20) with six threaded rods, tightened with nuts. Such number of rods ensures adequate strength of the structural connection.

The combustion chamber (22) was placed in the body, along with a grain (23) of solid rocket propellant. The use of a combustion chamber (22) in the shape of a "basket", terminated with an integral grate and having three threaded holes (M3 metric thread) on the side walls, used for pressurized screwing of the set screws (29), ensures that the central position of the grain (23) of propellant is maintained at the beginning of the experiment, which facilitates the ignition process over the entire available surface of the grain. The use of a grate with an appropriately selected number of through-holes in relation to the cross-section of the critical diameter of the nozzle, prevents the dangerous phenomenon of clogging of the outlet nozzle by a detached piece of grain and the consequent destruction of the test stand. In addition, the combustion chamber (22) is equipped with an external collector groove (30) for collecting exhaust gases and delivering them to the rocket micromotor body (21), followed by a pressure measurement port (33) and a safety valve port (24) and an exhaust gas dispersing tip (26).

The solid rocket micromotor (A) body (21) is equipped with a threaded pressure measurement port (33), into which a pressure sensor socket (35) having a cavity for a special insert (34) and a filter (45) was screwed, task of which consists in reducing the flow of solid particles of combustion products hitting into the surface of a sensor membrane (36), while maintaining the appropriate conditions for reliable measurement of pressure in the combustion chamber. The pressure sensor (36), a distance sleeve (37) made of polyamide were placed in the socket (35), and then the whole was closed with a clamping nut (38). The sleeve (37) used prevents the pressure sensor from moving along the axis of the socket (35). The shape of the insert (34) is related to the manufacturer's recommendations concerning to assembly of the pressure sensor used.

The body is also equipped with a safety valve (26), with a replaceable safety membrane (25), which valve is screwed into the safety valve port (24). The plate located in the safety valve, in the event of exceeding the specified permissible pressure, breaks, in effect opening an additional vent, thus reducing the pressure in the combustion chamber. The bleed system used counteracts the possibility of destroying the test stand.

On one side of the solid rocket micromotor (A) body (21), the outlet nozzle socket (27) was installed by sliding it onto threaded rods, screwed into the solid rocket micromotor (A) body (21), and then tightened with nuts. A replaceable nozzle insert (31) is mounted in a special clamp (32), sealed with a Viton^{®} O-ring. The nozzle section thus prepared is screwed into the outlet nozzle socket (27). The space between the nozzle insert (31) and the nozzle socket (27) provides an attachment plane for the membrane (28), which acts as a nozzle plug. The purpose of this plug is to maintain the correct pressure value in the combustion chamber at the time of initiating the combustion process, which greatly facilitates the start-up of the combustion chamber and contributes to increasing the accuracy of combustion time measurement. In the case of low pressures in the combustion chamber, the plug (28) allows the solid rocket micromotor (A) to start. Proper selection of the nozzle plug allows reducing the pressure build-up time in the motor chamber (22), improving the ignition characteristics, which in turn has a key effect on the subsequent combustion process and rocket motor performance.

On the opposite side of the solid rocket micromotor (A) body (21) there is an igniter section, whose task is to initiate the combustion process in the shortest possible time and in a reproducible manner in subsequent experiments. According to the invention, the following was used to initiate ignition: an electric primer (40) and a black powder bed in the form of a compressed disk-shaped lozenge (41) placed in a housing (39) (the design of the igniter was developed in a way that allows the use of black powder also in ground form). Thus prepared igniter, having an external metric thread, a Viton^{®} O-ring seal and a hexagonal head to facilitate tightening, was mounted in the solid rocket micromotor (A) body (21). Due to the use of the use of an interchangeable igniter housing (39), it is possible to use several types of igniter (40) differing in geometric dimensions.

The tightness of the connection between the key components of the laboratory solid rocket micromotor (A) (sections of: igniter, nozzle, pressure bleed in the chamber and pressure measurement) was achieved by using O-ring seals made of Viton^{®}.

### List of cross-reference designations

| | | | |
|---|---|---|---|
| **A** | Solid rocket micromotor | **23** | Grain - propellant |
| **B** | Igniter power supply system | **24** | Safety valve port |
| **1** | DC electric motor | **25** | Safety membrane |
| **2** | Encoder | **26** | Safety valve |
| **3** | Electric motor mount | **27** | Outlet nozzle socket |
| **4** | Bellows (backlash-free) coupling | **28** | Nozzle membrane |
| **5** | Main shaft | **29** | Set screw |
| **6** | First bearing unit | **30** | Collector groove |
| **7** | Second bearing unit | **31** | Nozzle insert |
| **8** | Energy storage module (battery) | **32** | Outlet nozzle clamp |
| **9** | Power supply system sleeve | **33** | Pressure measurement port |
| **10** | Conductive ring | **34** | Pressure sensor insert |
| **11** | Insulating ring | **35** | Pressure sensor socket |
| **12** | Closing ring | **36** | Pressure sensor |
| **13** | Pin | **37** | Distance sleeve |
| **14** | Power supply system base | **38** | Pressure sensor clamping nut |
| **15** | Carbon brush socket | **39** | Igniter housing |
| **16** | Carbon brush | **40** | Electric primer |
| **17** | Set screw with ball | **41** | Gunpowder lozenge |
| **18** | Bearing lock washer MB3 | **42** | Stand base |
| **19** | Bearing lock nut KM3 | **43** | Handle |
| **20** | Body mount | **44** | Electronic pressure measuring system in the combustion chamber |
| **21** | Solid micromotor body | **45** | Filter |
| **22** | Combustion chamber (basket) with grate | | |

## Claims

1. A laboratory stand for studying the effect of accelerations on the linear burning rate of solid rocket propellants comprising a DC electric motor (1) with an encoder (2) to measure the rotational speed, an energy storage module (8) seated on a main shaft (5) connected by supply lines to an electronic pressure measuring system (44), which is mounted on the main shaft (5) between an igniter power supply system (B) and a solid rocket micromotor (A), **characterized in that**
the DC electric motor (1) is connected to the encoder (2) to measure the rotational speed of the electric motor (1), and at the same time the electric motor (1) is connected to the main shaft (5) by a bellows coupling (4), and the energy storage module (8) is placed on the main shaft (5),
wherein the igniter power supply system (B) mounted on the main shaft (5) comprises a power supply system sleeve (9) on which conductive rings (10) and insulating rings (11) are placed, terminated with a closing ring (12) and carbon brushes (16),
wherein the electronic pressure measuring system (44) is connected to a pressure sensor (36) being mounted in the pressure sensor (36) socket (35) in connection to a combustion chamber (22) and with a solid rocket micromotor (A) body (21) by means of a pressure measurement port (33),
and, in addition, a solid rocket micromotor (A) body (21) mount (20) mounted on the main shaft (5) contains the combustion chamber (22) with an internal collector groove (30) and the pressure measurement port (33) and a safety valve port (24) with a safety valve (26) together with an outlet socket (27) on the side of the solid rocket micromotor (A) body (21).

2. The laboratory stand according to claim 1, **characterized in that** the electric motor (1) is frontally connected to a mount (3) of the electric motor (1).

3. The laboratory stand according to claim 1, **characterized in that** the main shaft (5) is supported on a first bearing unit (6) and a second bearing unit (7).

4. The laboratory stand according to claim 3, **characterized in that** the first bearing unit (6) contains a double-row angular ball bearing housed in a housing attached to a stand base (42).

5. The laboratory stand according to claims 3 or 4, **characterized in that** the second bearing unit (7) comprises the double-row angular ball bearing immobilized in the housing by two internal spring-loaded circlips.

6. The laboratory stand according to claim 1, **characterized in that** on both sides of the main shaft (5) there are symmetrically arranged two lithium-polymer batteries of energy storage (8).

7. The laboratory stand according to claim 1, **characterized in that** the power supply system sleeve (9) contains four conductive rings (10) and three insulating rings (11).

8. The laboratory stand according to claims 1 or 7, **characterized in that** the carbon brushes (16) are located in a socket (15) in contact with the conductive rings (10) by means of a spring clamping system located in the socket (15).

9. The laboratory stand according to claims 1 or 8, **characterized in that** the socket (15) is located on a power supply system base (14).

10. The laboratory stand according to claim 1, **characterized in that** the solid rocket micromotor (A) body (21) is connected to the mount (20) by six threaded rods with nuts.

11. The laboratory stand according to claim 1, **characterized in that** the pressure sensor (36) socket (35) has a cavity for the pressure sensor (36) insert (34) and a filter (45), a distance sleeve (37) closed by a clamping nut (38).

12. The laboratory stand according to claim 1, **characterized in that** the safety valve (26) has a safety membrane (25).

13. The laboratory stand according to claim 1, **characterized in that** the outlet socket (27) contains a nozzle insert (31) located in a clamp (32).

14. The laboratory stand according to claim 1, **characterized in that** a membrane (28) is located between the nozzle insert (31) and the nozzle socket (27).

15. The laboratory stand according to claim 1, **characterized in that** the igniter power supply system (B) contains an electric primer (40) and a disk-shaped gunpowder lozenge (41) housed in a housing (39) sealed with an o-ring.

## Patentansprüche

1. Ein Laborstand zur Untersuchung des Einflusses von Beschleunigungen auf die lineare Abbrandgeschwindigkeit von festen Raketentreibstoffen, umfassend einen Gleichstrom-Elektromotor (1) mit einem Encoder (2) zur Messung der Drehzahl, ein auf einer Hauptwelle (5) sitzendes Energiespeichermodul (8), das durch Versorgungsleitungen mit einem elektronischen Druckmesssystem (44) verbunden ist, das auf der Hauptwelle (5) zwischen einem Zünder-Stromversorgungssystem (B) und einem Feststoffraketen-Mikromotor (A) montiert ist, **dadurch gekennzeichnet, dass**
der Gleichstrom-Elektromotor (1) mit dem Encoder (2) verbunden ist, um die Drehzahl des Elektromotors (1) zu messen, und gleichzeitig der Elektromotor (1) mit der Hauptwelle (5) durch eine Balgkupplung (4) verbunden ist und auf der Hauptwelle (5) ein Energiespeichermodul (8) platziert ist,
wobei das Zünder-Stromversorgungssystem (B), das auf der Hauptwelle (5) durch eine Körperhalterung (20) montiert ist, eine Hülse (9) des Stromversorgungssystems umfasst, auf der Leitringe (10) und Isolierringe (11) platziert sind, die mit einem Schließring (12) und Kohlebürsten (16) abgeschlossen sind,
wobei das elektronische Druckmesssystem (44) mit einem Drucksensor (36) verbunden ist, der in der Buchse (35) des Drucksensors (36) montiert ist, die in Verbindung mit einer Brennkammer (22) und mit einem Körper (21) des Feststoffraketen-Mikromotors (A) mittels eines Druckmessungsanschlusses (33) steht,
und ferner die auf der Hauptwelle (5) montierte Halterung (20) des Körpers (21) des Feststoffraketen-Mikromotors (A) die Brennkammer (22) mit einer internen Kollektornut (30) und den Druckmessungsanschluss (33) sowie einen Sicherheitsventilanschluss (24) mit einem Sicherheitsventil (26) zusammen mit einer Auslassbuchse (27) auf der Seite des Körpers (21) des Feststoffraketen-Mikromotors (A) enthält.

2. Der Laborstand nach Anspruch 1, **dadurch gekennzeichnet, dass** der Elektromotor (1) stirnseitig mit einer Halterung (3) des Elektromotors (1) verbunden ist.

3. Der Laborstand nach Anspruch 1, **dadurch gekennzeichnet, dass** die Hauptwelle (5) auf einer ersten Lagereinheit (6) und einer zweiten Lagereinheit (7) gestützt ist.

4. Der Laborstand nach Anspruch 3, **dadurch gekennzeichnet, dass** die erste Lagereinheit (6) ein zweireihiges Schrägkugellager enthält, das in einem an einer Basis (42) des Standes befestigten Gehäuse untergebracht ist.

5. Der Laborstand nach Anspruch 3 oder 4, **dadurch gekennzeichnet, dass** die zweite Lagereinheit (7) das zweireihige Schrägkugellager umfasst, das in dem Gehäuse durch zwei interne federbelastete Sprengringe arretiert ist.

6. Der Laborstand nach Anspruch 1, **dadurch gekennzeichnet, dass** auf beiden Seiten der Hauptwelle (5) zwei Lithium-Polymer-Batterien des Energiespeichers (8) symmetrisch angeordnet sind.

7. Der Laborstand nach Anspruch 1, **dadurch gekennzeichnet, dass** die Hülse (9) des Stromversorgungssystems vier Leitringe (10) und drei Isolierringe (11) enthält.

8. Der Laborstand nach Anspruch 1 oder 7, **dadurch gekennzeichnet, dass** sich die Kohlebürsten (16) in einer Buchse (15) befinden und in Kontakt mit den Leitringen (10) mittels eines sich in der Buchse (15) befindenden Federklemmsystems stehen.

9. Der Laborstand nach Anspruch 1 oder 8, **dadurch gekennzeichnet, dass** sich die Buchse (15) auf einer Basis (14) des Stromversorgungssystems befindet.

10. Der Laborstand nach Anspruch 1, **dadurch gekennzeichnet, dass** der Körper (21) des Feststoffraketen-Mikromotors (A) mit der Halterung (20) durch sechs Gewindestangen mit Muttern verbunden ist.

11. Der Laborstand nach Anspruch 1, **dadurch gekennzeichnet, dass** die Buchse (35) des Drucksensors (36) einen Hohlraum für einen Einsatz (34) des Drucksensors (36) sowie einen Filter (45) und eine durch eine Klemmmutter (38) verschlossene Distanzhülse (37) aufweist.

12. Der Laborstand nach Anspruch 1, **dadurch gekennzeichnet, dass** das Sicherheitsventil (26) eine Sicherheitsmembran (25) aufweist.

13. Der Laborstand nach Anspruch 1, **dadurch gekennzeichnet, dass** die Auslassbuchse (27) einen sich in einer Klemme (32) befindenden Düseneinsatz (31) enthält.

14. Der Laborstand nach Anspruch 1, **dadurch gekennzeichnet, dass** sich zwischen dem Düseneinsatz (31) und der Düsenbuchse (27) eine Membran (28) befindet.

15. Der Laborstand nach Anspruch 1, **dadurch gekennzeichnet, dass** das Zünder-Stromversorgungssystem (B) eine elektrische Zündkapsel (40) und ein scheibenförmiges Schießpulverpellet (41) enthält, die in einem Gehäuse (39) untergebracht und mit einem O-Ring abgedichtet sind.

## Revendications

1. Statif de laboratoire pour étudier l'effet d'accélérations sur le taux de combustion linéaire de propergols solides comprenant un moteur électrique CC (1) avec un codeur (2) pour mesurer la vitesse de rotation, un module de stockage d'énergie (8) assis sur un arbre principal (5) relié par conduites d'alimentation à un système de mesure de pression électronique (44) qui est monté sur l'arbre principal (5) entre système d'alimentation électrique d'allumeur (B) et un micromoteur de fusée solide (A), **caractérisé en ce que**
le moteur électrique CC (1) est relié au codeur (2) pour mesurer la vitesse de rotation du moteur électrique (1), tandis que le moteur électrique (1) est relié au arbre principal (5) par accouplement à soufflet (4), et un module de stockage d'énergie (8) est placé sur l'arbre principal,
le système d'alimentation électrique d'allumeur (B) monté sur l'arbre principal (5) par support de corps (20) comprenant un manchon de système d'alimentation électrique (9) sur lequel des anneaux conducteurs (10) et des anneaux isolants (11) sont placés, terminés par un anneau de fermeture (12) et des balais de carbone (16),
le système de mesure de pression électronique (44) étant relié à un capteur de pression (36) étant monté dans un bloc (35) de capteur de pression (36) en liaison avec une chambre de combustion (22) et avec un corps (21) de micromoteur de fusée solide (A) par l'intermédiaire d'un port de mesure de pression (33),
et, de plus, le support (20) de corps (21) de micromoteur de fusée solide (A) monté sur l'arbre principal (5) contenant la chambre de combustion (22) avec une rainure de collecteur interne (30) et le port de mesure de pression (33) et un port de soupape de sûreté (24) avec une soupape de sûreté (26) conjointement avec un bloc de sortie (27) sur le côté du corps (21) de micromoteur de fusée solide (A).

2. Statif de laboratoire selon la revendication 1, **caractérisé en ce que** le moteur électrique (1) est relié frontalement à un support (3) du moteur électrique (1).

3. Statif de laboratoire selon la revendication 1, **caractérisé en ce que** l'arbre principal (5) est supporté sur une unité de palier première (6) et une unité de palier seconde (7).

4. Statif de laboratoire selon la revendication 3, **caractérisé en ce que** l'unité de palier première (6) contient un roulement à double rangée de billes angulaire logé dans une cage fixée à une base de statif (42).

5. Statif de laboratoire selon la revendication 3 ou 4, **caractérisé en ce que** l'unité de palier seconde (7) comprend le roulement à double rangée de billes angulaire immobilisé dans la cage par deux anneaux élastiques intérieurs à ressort.

6. Statif de laboratoire selon la revendication 1, **caractérisé en ce que** sur tous les deux côtés de l'arbre principal (5) se trouve deux batteries lithium-polymère de stockage d'énergie disposées de manière symétrique.

7. Statif de laboratoire selon la revendication 1, **caractérisé en ce que** le manchon de système d'alimentation électrique (9) contient quatre anneaux conducteurs (10) et trois anneaux isolants (11).

8. Statif de laboratoire selon la revendication 1 ou 7, **caractérisé en ce que** des balais de carbone (16) sont situés dans une douille (15) en contact avec des anneaux conducteurs (10) par l'intermédiaire d'un système de serrage de ressort situé dans la douille (15).

9. Statif de laboratoire selon la revendication 1 ou 8, **caractérisé en ce que** la douille (15) est située sur une base de système d'alimentation électrique (14).

10. Statif de laboratoire selon la revendication 1, **caractérisé en ce que** le corps (21) de micromoteur de fusée solide (A) est relié au support (20) par six tiges filetées avec des écrous.

11. Statif de laboratoire selon la revendication 1, **caractérisé en ce qu'un** bloc (35) de capteur de pression (36) a une cavité pour la fourrure (34) de capteur de pression (36) et un filtre (45), une douille d'écartement (37) fermée par un écrou de serrage (38).

12. Statif de laboratoire selon la revendication 1, **caractérisé en ce que** la soupape de sûreté (26) a une membrane de sûreté (25).

13. Statif de laboratoire selon la revendication 1, **caractérisé en ce que** le bloc de sortie (27) contient une fourrure de tuyère (31) située dans une bride (32).

14. Statif de laboratoire selon la revendication 1, **caractérisé en ce qu'**une membrane (28) est située entre la fourrure de tuyère (31) et un bloc de tuyère (27).

15. Statif de laboratoire selon la revendication 1, **caractérisé en ce que** le système d'alimentation électrique d'allumeur (B) contient un amorceur électrique (40) et un losange de poudre noire (41) en forme de disque logé dans un logement (39) scellé avec un joint torique.
